# EUROPÄISCHE PATENTSCHRIFT

(11) **EP 3 372 398 B1**
(45) Veröffentlichungstag und Bekanntmachung des Hinweises auf die Patenterteilung: **29.05.2019**
(21) Anmeldenummer: 18159484.7
(22) Anmeldetag: 01.03.2018
(51) Int. Cl.: B32B 3/08, B32B 3/28, B32B 5/02, B32B 5/24, B32B 5/26, B32B 7/14, B32B 7/12

(54) **ROLLO AUS EINEM FLÄCHENMATERIAL MIT SANDWICH-STRUKTUR**
ROLLER BLIND FROM A SHEET MATERIAL WITH SANDWICH STRUCTURE
STORE CONSTITUÉ EN MATÉRIAU DE SURFACE À STRUCTURE SANDWICH

(30) Priorität: 08.03.2017 DE 102017104828
(43) Veröffentlichungstag der Anmeldung: 12.09.2018
(73) Patentinhaber: Fraunhofer-Gesellschaft zur Förderung der angewandten Forschung e.V., 80686 München (DE)
(72) Erfinder: Bauer, Anette, 15712 Königs Wusterhausen OT Senzig (DE); Bernaschek, Andreas, 12435 Berlin (DE); Becker, Katharina, 10318 Berlin (DE); Borges, Ralf, 15370 Fredersdorf-Vogelsdorf (DE); Dreyer, Christian, 55758 Niederwörresbach (DE)
(74) Vertreter: Weisse, Renate

(56) Entgegenhaltungen:
- EP-A1- 0 358 920

## Beschreibung

### Technisches Gebiet

Die Erfindung betrifft ein Rollo aus einem Flächenmaterial mit einer Sandwich-Struktur, enthaltend
(a) einen Stützkern mit einer Vielzahl von Hohlräumen;
(b) eine erste Decklage auf einer ersten Seite des Stützkerns; und
(c) eine zur ersten Decklage parallele zweite Decklage auf einer zweiten Seite des Stützkerns.

Die Erfindung betrifft ferner ein Verfahren zur Herstellung eines solchen Rollos.

Als Galley wird die Bordküche in Verkehrsflugzeugen, Schiffen oder anderen Fahrzeugen bezeichnet. Fächer, in denen Gegenstände, Lebensmittel etc. untergebracht sind, müssen einerseits gut zugänglich sein und andererseits die darin befindlichen Gegenstände gegen Herausfallen sichern. Die Fächer werden daher mit Rollos verschlossen. Wichtig ist es vor allem bei der Verwendung in Galleys, dass die Rollos brennfest sind, d.h. die Airbus Directive ABD 0100.1.6 erfüllen, und dass das Material eine hohe Stabilität aufweist.

### Stand der Technik

Bekannte Rollos für Galleys werden aus Sandwich-Strukturen mit einem Honeycomb-Stützkern gefertigt. Der Honeycomb-Stützkern ist mit einer oberen und unteren Decklage versehen. Das plane und unflexible Material wird um eine Achse beweglich gemacht, indem es auf einer Planseite mit Schlitzen versehen wird. Die bekannten Rollos sind ausreichend steif und leicht und bestehen entsprechend den Vorschriften der Norm ABD 0100.1.6 beispielsweise für Verkehrsflugzeuge aus brennfestem Material.

Ein Beispiel für solche Sandwich-Strukturen ist auf http://beaerospace.com/products/structures-and-integration/honeycomb-panels/ veröffentlicht.

Nachteilig bei bekannten Rollos aus planem, steifem Material ist die aufwändige mehrstufige Herstellung, bei der das Flächenmaterial in einem weiteren Arbeitsschritt mit Schlitzen versehen muss.

EP0358920 offenbart ein Rollo aus einem Flächenmaterial mit einer Sandwich-Struktur.

### Offenbarung der Erfindung

Es ist Aufgabe der Erfindung, Rollos zu schaffen, die den Anforderungen insbesondere in einer Galley genügen und die Herstellungskosten zu reduzieren.

Erfindungsgemäß wird die Aufgabe dadurch gelöst, dass
(d) die zweite Decklage flexibel und mehrfach zerstörungsfrei biegbar ausgebildet ist;
(e) der Stützkern in einer Richtung zick-zack- oder wellenförmig abwechselnd auf- und abgekrümmt ist, so dass er um eine Achse parallel zum Verlauf der Krümmungen mehrfach zerstörungsfrei biegbar ausgebildet ist; und
(f) der Stützkern aus einem Textil in einer Matrix aus einem Harz oder einem thermoplastischen Material geformt ist; und
(g) das Flächenmaterial mit dem Stützkern, der ersten und der zweiten Decklage als Ganzes mehrfach zerstörungfrei biegbar ist.

Das Flächenmaterial ist dann nicht mehr in allen Richtungen steif ausgebildet, wie dies bei bekannten Sandwich-Strukturen mit Honeycomb-Stützkern der Fall ist. Vielmehr gibt es eine Richtung, in der die Flächenstruktur eine hohe Steifigkeit besitzt und eine Richtung quer dazu, in der das Flächenmaterial flexibel und mehrfach biegsam ist. Dabei ist das erfindungsgemäße Flächenmaterial nicht nur gebogen, sondern der Grad der Biegung ist variabel. Insbesondere kann das Flächenmaterial als Ganzes mit der Sandwich-Struktur zeitlich nacheinander sehr oft gebogen werden, ohne dass es zerstört wird. Dies ist bei einem Rollo, das oft geöffnet und geschlossen wird erforderlich. Es kann also bei dem Rollo zum Schließen und Öffnen beispielsweise von einer Rolle auf und abgerollt werden, in einer gekrümmten Führung laufen und gekrümmte Fächerfronten verschließen. Mit diesem Material kann auf einen vollständigen Arbeitsschritt bei der Herstellung, nämlich das Anbringen von Schlitzen, verzichtet werden. Das Flächenmaterial ist auch ohne Schlitze zerstörungsfrei um eine Achse biegbar, die parallel zu den Wellenkämmen des Stützkerns verläuft.

Vorzugsweise ist vorgesehen, dass das Textil in dem Stützkern ein Gewebe oder Gelege ist. Dadurch wird die Stabilität des Stützkerns weiter erhöht.

Das Textil in dem Stützkern kann aus Fasern bestehen, deren Fasermaterial ausgewählt ist aus der Gruppe: Kohle, Aramid, Basalt, Glas, Leinen, Zellulose und deren Kombination oder Mischungen daraus. Aufgrund ihrer mechanischen Eigenschaft, insbesondere ihrer Festigkeit, sind diese Materialien besonders gut geeignet.

Die Matrix in dem Stützkern kann aus einem thermoplastischen Material oder aus einer Harzmatrix aus einem Phenolharz, Epoxidharz, Polycyanuratharz, Polyurethan, Polyacrylat, Vinylester, ungesättiger Polyesther und Polyimide, deren Kombinationen oder Mischungen daraus gebildet sein.

Insbesondere kann vorgesehen sein, dass die fest mit den Wellenkämmen oder Erhebungen verbundene, erste Decklage ein Textil aus einem Gewebe oder unidirektionales Gelege umfasst. Dadurch wird die Stabilität der Anordnung erhöht.

Bei einer besonders bevorzugten Ausgestaltung der Erfindung ist vorgesehen, dass die Kettrichtung des Gewebes des Textils in der fest mit den Wellenkämmen oder Erhebungen verbundenen, ersten Decklage parallel zur Biegerichtung des Flächenmaterials verläuft. Dadurch wird eine glatte Oberfläche erreicht.

Die zweite, flexible Decklage kann aus einem PVDF-Schaum, Polyvinylidenfluorid, Tyvek-Folie, einem Polyethylenvlies oder einem textilen Material, das nicht oder wenig imprägniert ist, gebildet sein. Tyvek ist eine Marke der E.I. Du Pont de Nemours and Co., Wilmington Del., US und bezeichnet eine Produktfamilie aus robusten, langlebigen Spinnvlies-Olefinfaserstoffen, die stärker als Papier sowie kostengünstiger und vielseitiger als Textilerzeugnisse sind. Die dünne Imprägnierung des Textils kann beispielsweise aus Kunststoff oder Gummi sein.

Bei einer Ausgestaltung der Erfindung ist der Querschnitt über die gesamte Breite des Materials gleich. Dadurch wird eine gleichmäßige hohe Stabilität erreicht.

Bei einer besonders bevorzugten Ausgestaltung der Erfindung ist vorgesehen, dass das Flächenmaterial in einer Führung geführt ist und im Bereich der Führung mit Teflon beschichtet oder mit Teflonbändern versehen ist. Durch die Teflonschicht gleitet das Flächenmaterial reibungsarm in der Führung.

Vorzugsweise ist vorgesehen, dass alle Materialien brennfest ausgebildet sind und insbesondere die Anforderungen der Norm Airbus Directive ABD 0100.1.6 erfüllen. Dann darf das Rollo auch in Galleys in Flugzeugen eingesetzt werden. Dies wird nach der Norm ABD 0031 (Airbus Fireworhiness Requirements Pressurized Section of Fuselage) getestet.

Die Rollos können nach einem Verfahren mit folgenden Schritten hergestellt werden:
(a) Formen eines Prepregs zu einem Stützkern, der in einer Richtung zick-zack- oder wellenförmig abwechselnd auf- und abgekrümmt ist, aus einem Textil in einer Matrix aus thermoplastischem Material oder einer Harzmatrix;
(b) Aufbringen einer Decklage auf den vorgeformten Stützkern;
(c) Heizen der Decklage und/oder des Wellkerns, so dass die Decklage mit dem Stützkern verbunden und ausgehärtet wird.

Das Verfahren kann kontinuierlich auf dem Band oder diskontinuierlich mit einzelnen Flächenmaterialien durchgeführt werden. Bei dem kontinuierlichen Verfahren wird eine der Decklagen im gleichen Arbeitsgang aufgebracht, verbunden und ausgehärtet, wie der Stützkern. Dadurch wird die Herstellung vereinfacht und beschleunigt.

Insbesondere kann aber auch ein diskontinuierliches Verfahren mit Glasfaser-Phenolharz-Prepregs zwischen zwei Werkzeugen vorgesehen sein, bei dem die Härtung des Stützkerns im Werkzeug über einen Zeitraum von 60 bis 90 Minuten, vorzugweise 75 Minuten bei 100 bis 170°C, vorzugsweise bei 135°C erfolgt. Die Anbindung der Decklage an den Stützkern kann mit einer Presse und Härtung über einen Zeitraum von 60 bis 90 Minuten, vorzugweise 75 Minuten bei 100 bis 170°C, vorzugsweise bei 135°C erfolgen. Es versteht sich, dass andere Materialien andere Temperaturen und/oder Zeiten erfordern.

Bei einer weiteren Ausgestaltung der Erfindung ist im diskontinuierlichen oder im Anschluss an das kontinuierliche Verfahren vorgesehen, dass eine Folie als zweite Decklage mittels eines thermoplastischen Klebevlieses oder einer Klebefolie über 5 bis 15 Minuten, vorzugsweise über 10 Minuten bei 100 bis 150°C, vorzugsweise bei 125°C an den Stützkern angebunden wird. Es versteht sich, dass andere Materialien andere Temperaturen und/oder Zeiten erfordern.

Im diskontinuierlichen Verfahren können kleine Flächenmaterialien, etwa 740 mm x 750 mm verarbeitet werden. Es ist aber auch möglich größere Flächen, beispielsweise 1500 mm x 1500 mm zu verarbeiten. Im kontinuierlichen Verfahren ist die Länge beliebig und die Breite ist nur durch die Breite der Maschine bzw. der dort verwendeten Werkzeugelemente begrenzt.

Ausgestaltungen der Erfindung sind Gegenstand der Unteransprüche. Ausführungsbeispiele sind nachstehend unter Bezugnahme der beigefügten Zeichnungen näher erläutert.

### Kurze Beschreibung der Zeichnungen

- Fig. 1: ist ein schematischer Querschnitt durch eine Anordnung zur Herstellung eines Rollos.
- Fig.2a-d: illustriert die verschiedenen Werkzeuge zur Herstellung verschiedener Wellenformen in einem Textil in einer Harzmatrix für den Stützkern eines Rollos.
- Fig.3: ist ein Querschnitt durch ein Rollo in gebogenem Zustand.
- Fig.4: ist eine perspektivische Darstellung des Rollos aus Figur 3.
- Fig.5: ist eine perspektivische Darstellung des Flächenmaterials für ein Rollo.

### Beschreibung der Ausführungsbeispiele

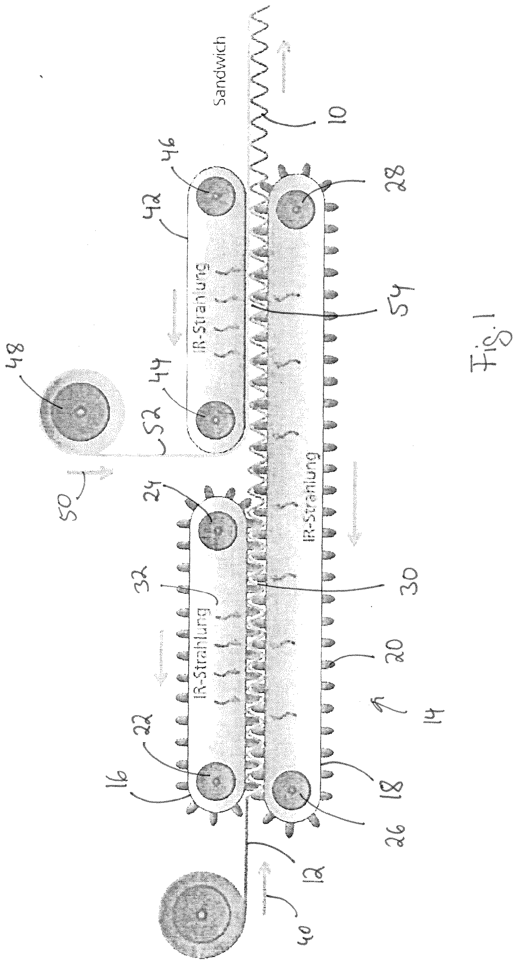

Figur 1 illustriert die Herstellung eines Flächenformteil 10 aus einem Prepreg in Form eines imprägnierten textilen Gewebes 12. Eine Umformeinrichtung 14 weist zwei Trägerbänder 16 und 18 auf. Die Umformeinrichtung 14 umfasst ein erstes, unteres Trägerband 18 und ein zweites, oberes Trägerband 16. Jedes der Trägerbänder 16 und 18 ist mit Werkzeugelementen 20 versehen. Das Trägerband 16 läuft auf einem Paar von Umlenkrollen 22 und 24. Das Trägerband 18 läuft auf einem Paar von Umlenkrollen 26 und 28. Die Umlenkrollen 22, 24, 26 und 28 sind mit parallelen Achsen so aneinander grenzend angeordnet sind, dass zwischen den zueinander weisenden Seiten der Trägerbänder 16 und 18 ein Transportweg 30 gebildet wird. Der Transportweg bildet einen Umformbereich 30. Die Bandrichtung der Trägerbänder 16 und 18 entlang des Umformbereichs 30 wird als x-Richtung bezeichnet. Die Querrichtung zur Bandrichtung in der Ebene der Werkzeugelemente 20 wird als y-Richtung bezeichnet. Die Richtung senkrecht zur Bandrichtung und zur Ausrichtung der Werkzeugelemente 20 wird als z-Richtung bezeichnet. Abweichend zum dargestellten Ausführungsbeispiel kann die Umformeinrichtung 14 mit weiteren Rollen zwischen den oder außerhalb der Umlenkrollen 22, 24, 26 und 28 ausgestattet sein (nicht dargestellt).

Die Umformeinrichtung 14 ist mit Antriebseinrichtungen (nicht dargestellt) zum Antrieb von mindestens einer der Umlenkrollen 22, 24, 26 und 28 und zu deren Verstellung in z-Richtung ausgestattet, wie es an sich von herkömmlichen Bandpressen bekannt ist.

Die Trägerbänder 16 und 18 haben eine Breite, die in Abhängigkeit von der konkreten Ausgestaltung eines herzustellenden Rollos ausgewählt ist.

Die Länge der Trägerbänder 16 und 18 wird durch die Durchmesser der Umlenkrollen 22, 24, 26 und 28 und die Länge des Umformbereichs 30 bestimmt. Im vorliegenden Ausführungsbeispiel haben die Umlenkrollen 26 und 28 einen größeren Abstand als die Umlenkrollen 22 und 24. Dadurch ist die Länge des Trägerbandes 16 kürzer als die Länge des Trägerbandes 18. Der Umformbereich 30 ist in dem Bereich des Trägerbandes 18 angeordnet, an dem das textile Gewebe zugeführt wird. Auf diese Weise kann das geformte Material länger auf dem Trägerband 18 laufen.

Zwischen den Umlenkrollen 22, 24, 26 und 28 ist genügend Platz für mindestens eine Härtungseinrichtung 32. Die Härtungseinrichtung 32, die entlang des Umformbereichs 30 zwischen den Umlenkrollen 22 und 24 angeordnet ist, wird für eine beidseitige Bestrahlung des Umformbereichs 30 mit Infrarotstrahlung konfiguriert. Eine weitere Strahlungsquelle für Infrarotstrahlung kann zwischen den Umlenkrollen 26 und 28 des Trägerbandes 18 vorgesehen sein. Alternativ ist es möglich die Infrarot-Strahlungsquellen in die Umlenkrollen zu integrieren. Statt Infrarot-Strahlungsquellen können auch Mikrowellenstrahungsquellen, oder Umluft verwendet werden.

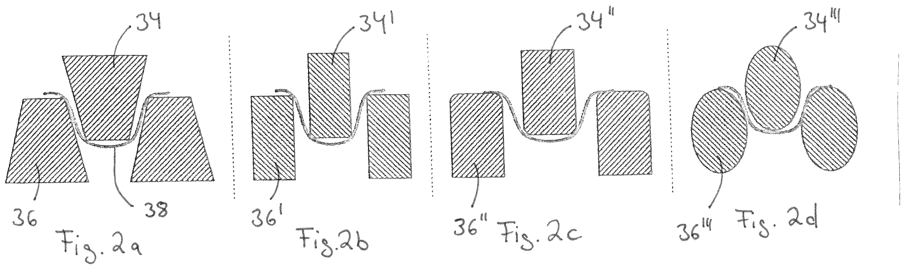

Jedes der Trägerbänder 16 und 18 ist mit einer Reihe von Werkzeugelementen 20 ausgestattet. Die Werkzeugelemente sind in Bandrichtung zueinander benachbart angeordnet. Bevorzugte Varianten der erfindungsgemäß verwendeten Werkzeugelemente 20 sind in den Figuren 2a bis 2d gezeigt. Die Werkzeugelemente 20 sind mit Formgebungselementen in Gestalt von langgestreckten Stempeln 34, 34', 34", 34''' ausgestattet, die verschiedene Querschnitte haben können. Werkzeug 34 ist trapezförmig ausgebildet, wobei der Stempel nach unten verjüngt ist. Stempel 34' ist rechteckig ausgebildet mit geringer Breite und Stempel 34" ist rechteckig ausgebildet mit etwas größerer Breite. Stempel 34''' hat einen teilweise elliptischen Querschnitt, wobei die Hauptachse der Ellipse sich in z-Richtung erstreckt. Die Stempel haben über die gesamte Breite in y-Richtung den gleichen Querschnitt.

Gemäß Figur 2a-d sind die Werkzeugelemente 20 sowohl des ersten Trägerbandes 16 als auch des zweiten Trägerbandes 18 jeweils mit den Stempeln 34 ausgestattet. Die Trägerbänder 16 und 18 sind so relativ zueinander positioniert und die Stempel 34, 34', 34" bzw. 34''' sind so voneinander beabstandet angeordnet, dass die Stempel 34 34', 34" bzw. 34''', die jeweils zu den verschiedenen Trägerbändern 16 und 18 gehören, entlang des Umformbereichs 30 zueinander versetzt sind. Die Stempel 34, 34', 34", 34''' der Werkzeugelemente des ersten Trägerbandes 16 ragen in Abstände zwischen Stempeln 36 bzw. 36', 36" und 36''' der Werkzeugelemente 20 des zweiten Trägerbandes 18. Je nach Form der Stempel 34, 34', 34" bzw. 34''' werden unterschiedlich geformte Wellen 38 erzeugt.

Bei der Herstellung des Flächenformteils 10 wird das textile Gewebe 12 als flächenhaftes Gebilde in den Umformbereich 30 zwischen den Trägerbändern 16 und 18 eingeführt. Dies ist durch einen Pfeil 40 illustriert. Das Rohmaterial des Gewebes 12 umfasst z. B. ein Glasfaser-Phenolharz-Prepreg mit einem Gewebe aus Glasfasern in einer Phenolharz-Matrix. Das Gewebe 12 läuft von einer Rolle und wird von den ineinander greifenden Werkzeugelementen 20 erfasst und zwischen den Arbeitsflächen der Werkzeugelemente 20 aufgespannt. Zwischen den Stirnflächen der Stempel 34 ist das Gewebe 12 frei tragend aufgespannt. In diesem Zustand erfolgen der Transport entlang des Umformbereiches 30 und die Härtung mit IR-Strahlung aus einer Strahlungsquelle 32. Das gehärtete Material wird als Flächenformteil 10 am Ende des Umformbereiches 30 aus der Umformeinrichtung 14 ausgegeben.

Das Aufbringen eines Glasfaser-Phenolharz-Prepregs als Decklage 52 erfolgt indem die Decklage auf das Flächenformteil 10 aufgebracht und mittels einer heizbaren Bandpresse wie folgt verbunden und ausgehärtet wird: Im vorliegenden Ausführungsbeispiel ist das Trägerband 18 länger als das Trägerband 16. Dadurch läuft das fertig geformte Flächenformteil 10 hinter dem Umformbereich 30 auf dem Trägerband 18 weiter. Hinter dem Umformbereich 30 läuft ein weiteres Trägerband 42 auf Rollen 44 und 46. An dem Trägerband 42 sind keine Werkzeugelemente vorgesehen.

Von einer Rolle 48 wird eine Decklage 52 aus einem Glasfaser-Phenolharz-Prepreg in Richtung des Pfeils 50 in Figur 1 zugeführt. Die Decklage 52 wird über die Rolle 44 in einen Verbindungsbereich 55 oberhalb des Flächenformteils 10 geführt. Im vorliegenden Ausführungsbeispiel wird die Decklage 52 von oben und das Flächenformteil 10 von unten mit IR-Strahlung bestrahlt. Zusätzlich wird die Decklage 52 auf das Flächenformteil 10 aufgepresst. Dabei wird die Decklage 52 mit den Wellenkämmen des Flächenformteils 10 vor dem vollständigen Aushärten verbunden. Das Flächenformteil 10 mit der Decklage 52 wird von der Unterseite in Figur 1, d.h. der der Decklage 52 gegenüberliegenden Seite des Flächenformteils 10 mit einer flexiblen Folie, beispielsweise eine Tyvek-Folie 54 versehen. Die Folie wird mit einem geeigneten Kleber aufgeklebt. Die Glasfaser-Phenolharz-Decklage 52 wird im diskontinuierlichen Verfahren 75 Minuten bei 135°C an das Flächenformteil in der Anordnung 14 angebunden und ausgehärtet. Im kontinuierlichen Verfahren wird das Stützkern-Material ca. 5 Minuten bei ca. 180°C ausgehärtet. Dabei werden die Bänder mit einer Geschwindigkeit gefahren, dass die Aushärtestrecke 55 in ca. 5 Minuten passiert wird. Anschließend werden die vorgehärteten Materialien im Ofen nachgehärtet. Die Anbindung der Tyvek-Decklage erfolgt 10 Minuten lang bei 125°C mittels eines thermoplastischen Klebevlieses. Anschließend wird das so hergestellte Flächenmaterial mit Sandwich-Struktur aus ausgehärtetem Flächenformteil 10 und Decklagen 52 und 54 zugeschnitten. Das zugeschnittene Flächenmaterial wird an den Seiten mit einer dünnen Teflonfolie versehen um die Reibung in den Führungen zu reduzieren.

Für die Stützkemherstellung können unterschiedliche Prepregs verwendet werden. Neben einem Glasfaser-Phenolharz-Prepreg mit einem Flächengewicht von ca. 500 g/m² kann auch ein Glasfaser-Phenolharz- oder anderes Prepreg ohne Phenolharz mit einem anderen Flächengewicht verwendet werden.

Die Biegeeigenschaften des Flächenmaterials bleiben nach Temperatur- und Feuchtigkeitsbelastung erhalten. Die in Flugzeugen eingesetzten Medien, wie Desinfektionsmittel, Salz, Permethrin, Reinigungsflüssigkeiten, Isopropanol, gezuckerte Cola, Zitronensäure und Kaffee hinterlassen farbliche Rückstände, greifen die Materialien aber nicht an.

Orientierung der Glasfaser-Phenolharz-Decklage hat einen Einfluss auf die Oberflächenqualität des Sandwiches. Vorzugsweise liegt die Kettrichtung des Prepreggewebes der Decklage 52 in Biegerichtung. Dadurch wird eine glatte Oberfläche erhalten. Wenn dagegen die Schussrichtung in Biegerichtung liegt, treten kleine Poren oder Bläschen auf.

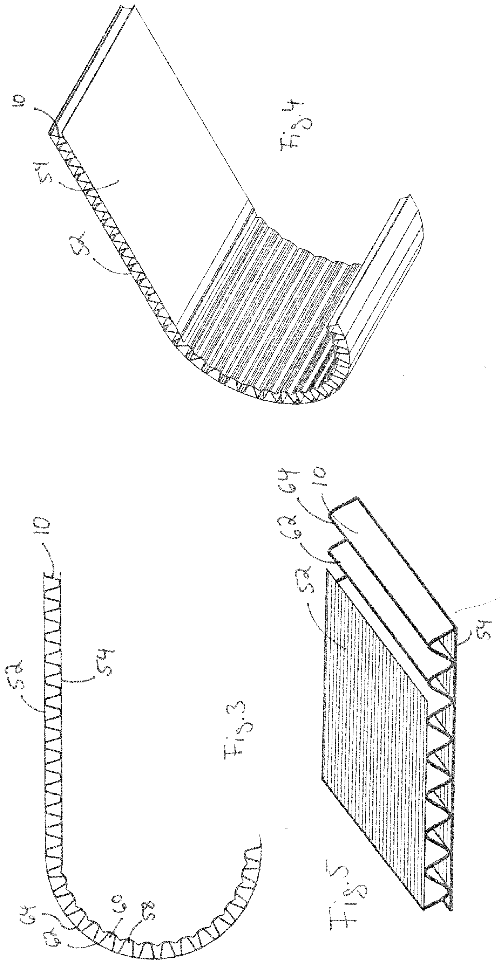

Figur 3 zeigt einen Querschnitt durch das gekrümmte Flächenmaterial in Sandwichstruktur. Das geformte Flächenformteil 10 bildet einen Stützkern. Figur 4 ist eine perspektivische Darstellung des gekrümmten Flächenmaterials. Figur 5 ist eine perspektivische Darstellung des planen Flächenmaterials. Die Decklage 52 ist auf der Außenseite des gekrümmten Flächenmaterials angeordnet. Die Folie 54 ist auf der Innenseite des gekrümmten Flächenmaterials angeordnet. Die Folie 54 ist so flexibel, dass sie sich zwischen die Wellenkämme 58, 60 biegt, wenn diese in der Krümmung auf der Innenseite enger zusammenliegen als auf der Außenseite. Dies ist in Figur 3 und 4 gut zu erkennen. Demgegenüber behalten die Wellenkämme 62, 64 auf der Außenseite ihren Abstand. Die Decklage 52 braucht nur der Krümmung mit dem großen Krümmungsradius folgen und kann daher dicker und stabiler ausgebildet sein, als die Folie 54.

Figur 5 illustriert, den Aufbau der Sandwich-Struktur des Rollos. Man erkennt, dass die Wellen sich über die gesamte Breite des Flächenmaterials erstrecken. Dadurch wird eine hohe Stabilität in Richtung der Krümmungsachsen erreicht. In Biegungsrichtung hingegen ist das Flächenmaterial flexibel.

Die oben erläuterten Ausführungsbeispiele dienen der Illustration der in den Ansprüchen beanspruchten Erfindung. Merkmale, welche gemeinsam mit anderen Merkmalen offenbart sind, können in der Regel auch alleine oder in Kombination mit anderen Merkmalen, die im Text oder in den Zeichnungen explizit oder implizit in den Ausführungsbeispielen offenbart sind, verwendet werden. Maße und Größen sind nur beispielhaft angegeben. Dem Fachmann ergeben sich geeignete Bereiche aus seinem Fachwissen und brauchen hier daher nicht näher erläutert werden. Die Offenbarung einer konkreten Ausgestaltung eines Merkmals bedeutet nicht, dass die Erfindung auf diese konkrete Ausgestaltung beschränkt werden soll. Vielmehr kann ein solches Merkmal durch eine Vielzahl anderer, dem Fachmann geläufigen Ausgestaltungen verwirklicht werden. Die Erfindung kann daher nicht nur in Form der erläuterten Ausgestaltungen verwirklicht werden, sondern durch alle Ausgestaltungen, welche vom Schutzbereich der beigefügten Ansprüche abgedeckt sind. So ist es beispielsweise möglich die Herstellung zu verändern und die Decklagen von Hand oder mit anderen Maschinen aufzubringen, als hier dargestellt, ohne dass vom Erfindungsgedanken abgewichen wird.

Die Begriffe "oben", "unten", "rechts" und "links" beziehen sich ausschließlich auf die beigefügten Zeichnungen. Es versteht sich, dass beanspruchte Vorrichtungen auch eine andere Orientierung annehmen können. Der Begriff "enthaltend" und der Begriff "umfassend" bedeuten, dass weitere, nicht-genannte Komponenten vorgesehen sein können. Unter dem Begriff "im Wesentlichen", "vorwiegend" und "überwiegend" fallen alle Merkmale, die eine Eigenschaft oder einen Gehalt mehrheitlich, d.h. mehr als alle anderen genannten Komponenten oder Eigenschaften des Merkmals aufweisen, also bei zwei Komponenten beispielsweise mehr als 50%.

## Patentansprüche

1. Rollo aus einem Flächenmaterial mit einer Sandwich-Struktur, enthaltend
(a) einen Stützkern (10) mit einer Vielzahl von Hohlräumen;
(b) eine erste Decklage (52) auf einer ersten Seite des Stützkerns (10); und
(c) eine zur ersten Decklage (52) parallele zweite Decklage (54) auf einer zweiten Seite des Stützkerns (10);
**dadurch gekennzeichnet, dass**
(d) die zweite Decklage (54) flexibel und mehrfach zerstörungsfrei biegbar ausgebildet ist;
(e) der Stützkern (10) in einer Richtung zick-zack- oder wellenförmig abwechselnd auf- und abgekrümmt ist, so dass er um eine Achse parallel zum Verlauf der Krümmungen mehrfach zerstörungsfrei biegbar ausgebildet ist;
(f) der Stützkern aus einem Textil in einer Matrix aus einem Harz oder einem thermoplastischen Material geformt ist, und
(g) das Flächenmaterial mit dem Stützkern (10), der ersten und der zweiten Decklage als Ganzes mehrfach zerstörungfrei biegbar ist.

2. Rollo nach Anspruch 1, **dadurch gekennzeichnet, dass** das Textil in dem Stützkern (10) ein Gewebe oder Gelege ist.

3. Rollo nach einem der vorgehenden Ansprüche, **dadurch gekennzeichnet, dass** das Textil in dem Stützkern (10) aus Fasern besteht, deren Fasermaterial ausgewählt ist aus der Gruppe: Kohle, Aramid, Basalt, Glas, Leinen, Zellulose und deren Kombination oder Mischungen daraus.

4. Rollo nach einem der vorgehenden Ansprüche, **dadurch gekennzeichnet, dass** die Matrix in dem Stützkern aus einem thermoplastischen Material oder aus einer Harzmatrix aus einem Phenolharz, Epoxidharz, Polycyanuratharz, Polyurethan, Polyacrylat, Vinylester, ungesättiger Polyesther und Polyimide, deren Kombinationen oder Mischungen daraus gebildet ist.

5. Rollo nach einem der vorgehenden Ansprüche, **dadurch gekennzeichnet, dass** die erste Decklage (52) ein imprägniertes Textil aus einem Gewebe oder einem unidirektionalen Gelege umfasst.

6. Rollo nach Anspruch 5, **dadurch gekennzeichnet, dass** die Kettrichtung des Gewebes des Textils in der ersten Decklage (52) parallel zur Biegerichtung des Flächenmaterials verläuft.

7. Rollo nach einem der vorgehenden Ansprüche, **dadurch gekennzeichnet, dass** die zweite, flexible Decklage (54) aus einem PVDF-Schaum, Polyvinylidenfluorid, Tyvek-Folie, einem Polyethylenvlies oder einem textilen Material, das nicht oder wenig imprägniert ist, gebildet ist.

8. Rollo nach einem der vorgehenden Ansprüche, **dadurch gekennzeichnet, dass** der Querschnitt über die gesamte Breite des Materials gleich ist.

9. Rollo nach einem der vorgehenden Ansprüche, **dadurch gekennzeichnet, dass** das Flächenmaterial in einer Führung geführt ist und im Bereich der Führung mit Teflon beschichtet oder mit Teflonbändern versehen ist.

10. Rollo nach einem der vorgehenden Ansprüche, **dadurch gekennzeichnet, dass** alle Materialien brennfest sind und die Airbus Direktive ABD 0100.1.6 erfüllen.

11. Verfahren zur Herstellung eines Rollos nach einem der vorgehenden Ansprüche, **gekennzeichnet durch** die Schritte:
(a) Formen eines Prepregs (12) zu einem Stützkern (10), der in einer Richtung zick-zack- oder wellenförmig abwechselnd auf- und abgekrümmt ist, aus einem Textil in einer Matrix aus thermoplastischem Material oder einer Harzmatrix;
(b) Aufbringen einer Decklage (52) auf den vorgeformten Stützkern (10);
(c) Heizen der Decklage (52) und/oder des Stützkerns (10), so dass die Decklage (52) mit dem Stützkern (10) verbunden und ausgehärtet wird.

12. Verfahren nach Anspruch 11, **dadurch gekennzeichnet, dass** das Flächenmaterial diskontinuierlich hergestellt wird und die Härtung des Stützkerns (10) im Werkzeug über einen Zeitraum von 60 bis 90 Minuten, vorzugweise 75 Minuten bei 100 bis 170°C, vorzugsweise bei 135°C erfolgt.

13. Verfahren nach Anspruch 11, **dadurch gekennzeichnet, dass** der Stützkern kontinuierlich auf einem Band hergestellt wird und die Härtung auf dem Band erfolgt.

14. Verfahren nach einem der Ansprüche 11 bis 13, **dadurch gekennzeichnet, dass** die Anbindung der Decklage (52) an den Stützkern (10) mit einer Presse und Härtung über einen Zeitraum von 60 bis 90 Minuten, vorzugweise 75 Minuten bei 100 bis 170°C, vorzugsweise bei 135°C erfolgt.

15. Verfahren nach einem der Ansprüche 11 bis 14, **dadurch gekennzeichnet, dass** eine Folie (54) als weitere Decklage mittels eines thermoplastischen Klebevlieses über 5 bis 15 Minuten, vorzugsweise über 10 Minuten bei 100 bis 150°C, vorzugsweise bei 125°C an den Stützkern angebunden wird.

## Claims

1. Roller blind from sheet material with a sandwich structure, comprising
(a) a support core (10) with a plurality of cavities;
(b) a first cover layer (52) on a first side of the support core (10); and
(c) a second cover layer (54) on a second side of the support core (10) which extends parallel to the first cover layer (52);
**characterized in that**
(d) the second cover layer (54) is flexible and adapted to be bent a plurality of times without destruction;
(e) the support core (10) is bent upwards and downwards in one direction in a zig-zag or wave-shaped manner, whereby it is adapted to be bent about an axis parallel to the extent of the curvature a plurality of times without destruction;
(f) the support core is formed from textile material in a matrix of resin or another thermoplastic material, and
(g) the sheet material with the support core (10) the first and the second cover layers as a whole are adapted to be bent a plurality of times without destruction.

2. Roller blind according to claim 1, **characterized in that** the textile in the support core (10) is a woven web or laid web.

3. Roller blind according to any of the preceding claims, **characterized in that** the textile in the support core (10) consists of fibers with a fiber material selected from the group of: carbon, aramid, basalt, glass, linen, cellulose and combinations or mixtures thereof.

4. Roller blind according to any of the preceding claims, **characterized in that** the matrix in the support core is formed of a thermoplastic material or of a resin matrix from a phenol resin, epoxy resin, polycyanurat resin, polyurethane, Polyacrylate, vinyl ester, unsaturated polyester and polyimides or combinations or mixtures thereof.

5. Roller blind according to any of the preceding claims, **characterized in that** the first cover layer (52) comprises an impregnated textile of a web or a unidirectional laid web.

6. Roller blind according to claim 5, **characterized in that** the warp direction of the web of the textile in the first cover layer (52) extends parallel to the bending direction of the sheet material.

7. Roller blind according to any of the preceding claims, **characterized in that** the second, flexible cover layer (54) is formed of a PVDF foam, polyvinyliden fluoride, Tyvek-film, a polyethylene mat or a textile material which is not or only little impregnated.

8. Roller blind according to any of the preceding claims, **characterized in that** the cross section is uniform along the entire width of the material.

9. Roller blind according to any of the preceding claims, **characterized in that** the sheet materials is guided in a rail and coated with Teflon or provided with Teflon bands in the range of the rails.

10. Roller blind according to any of the preceding claims, **characterized in that** all materials are fireproof and comply with Airbus Directive ABD 0100.1.6.

11. Method for manufacturing a roller blind according to any of the preceding claims, **characterized by** the steps of:
(a) forming a prepreg (12) to become a support core (10) which is alternatingly bent upwards and downwards in one direction in a zig-zag or wave-shaped manner from a textile in a matrix of thermoplastic material or another resin matrix;
(b) covering the preformed support core (10) with a cover layer (52);
(c) heating the cover layer (52) and/or the support core (10) whereby the cover layer (52) is connected to the support core (10) and cured.

12. Method according to claim 11, **characterized in that** the sheet material is produced discontinuously and the curing of the support core (10) is effected in the tool over a duration of 60 to 90 minutes, preferably 75 minutes at 100°C to 170°C, preferably at 135°C.

13. Method according to claim 11, **characterized in that** the support core is continuously produced on a conveyor belt and the curing is effected on the conveyor belt.

14. Method according to any of the claims 11 to 13, **characterized in that** the connection of the cover layer (52) to the support core (10) is effected by a press and curing is effected over a duration of 60 to 90 minutes, preferably 75 minutes at 100°C to 170°C, preferably at 135°C

15. Method according to any of the claims 11 to 14, **characterized in that** a film (54) is connected to the support core as a further cover layer by means of a thermoplastic glue mat for 5 to 15 minutes, preferably for 10 minutes at 100 to 150°C, preferably at 125 °C.

## Revendications

1. Store fait d'un matériau plat et présentant une structure en sandwich, comprenant
(a) un noyau support (10) présentant de nombreux espaces creux ;
(b) un premier revêtement (52) appliqué sur une première face du noyau support (10) ; et
(c) un second revêtement (54) parallèle au premier revêtement (52) et appliqué sur une seconde face du noyau support (10) ;
**caractérisé en ce que**
(d) le second revêtement (54) est configuré de sorte à être souple et pouvoir se plier plusieurs fois sans s'endommager ;
(e) le noyau support (10) est recourbé en alternance en dedans et en dehors dans un sens en forme de zigzag ou d'ondulation de sorte qu'il est configuré de sorte à pouvoir se plier plusieurs fois sans s'endommager autour d'un axe parallèlement au tracé des courbures ;
(f) le noyau support est formé d'un textile fait dans une matrice faite de résine ou d'un matériau thermoplastique, et
(g) le matériau plat présentant le noyau support (10), le premier et le second revêtement peut se plier tout en entier plusieurs fois sans s'endommager.

2. Store selon la revendication 1, **caractérisé en ce que** le textile situé dans le noyau support (10) est un tissu tissé ou un tissu non-tissé.

3. Store selon l'une quelconque des revendications précédentes, **caractérisé en ce que** le textile situé dans le noyau support (10) se compose de fibres dont le matériau fibreux est choisi parmi le groupe de : carbone, aramide, basalte, verre, lin, cellulose, et de leurs composés ou de leurs mélanges.

4. Store selon l'une quelconque des revendications précédentes, **caractérisé en ce que** la matrice située dans le noyau support est formée d'un matériau thermoplastique ou d'une matrice de résine faite de résine phénolique, de résine époxy, de résine de polycyanurate, de polyuréthane, de polyacrylate, d'ester vinylique, de polyesters insaturés ou de polyimides, de leurs composés ou de leurs mélanges.

5. Store selon l'une quelconque des revendications précédentes, **caractérisé en ce que** le premier revêtement (52) comprend un textile imprégné fait de tissu tissé ou de tissu non-tissé unidirectionnel.

6. Store selon la revendication 5, **caractérisé en ce que** le sens de la chaîne du tissu tissé du textile s'étend dans le premier revêtement (52) parallèlement au sens de pliage du matériau plat.

7. Store selon l'une quelconque des revendications précédentes, **caractérisé en ce que** le second revêtement souple (54) est formé de mousse PVDF, de fluorure de polyvinylidène, de film Tyvek, d'une nappe de fibres de polyéthylène ou d'un matériau textile peu ou pas du tout imprégné.

8. Store selon l'une quelconque des revendications précédentes, **caractérisé en ce que** la section transversale est la même sur toute la largeur du matériau.

9. Store selon l'une quelconque des revendications précédentes, **caractérisé en ce que** le matériau plat est guidé dans une glissière et est recouvert de Téflon dans la zone de la glissière ou pourvu de bandes de Téflon.

10. Store selon l'une quelconque des revendications précédentes, **caractérisé en ce que** tous les matériaux sont incombustibles et conformes à la directive Airbus ABD 0100.1.6.

11. Procédé pour la fabrication d'un store selon l'une quelconque des revendications précédentes, **caractérisé par** les étapes de :
(a) formage d'un prépreg (12) en noyau support (10) qui est recourbé en alternance en dedans et en dehors dans un sens en forme de zigzag ou d'ondulation et qui est composé d'un textile fait dans une matrice faite d'un matériau thermoplastique ou d'une matrice de résine ;
(b) application d'un revêtement (12) sur le noyau support préformé (10) ;
(c) chauffage du revêtement (52) et/ou du noyau support (10) de sorte que le revêtement (52) soit assemblé avec le noyau support (10) et ait durci.

12. Procédé selon la revendication 11, **caractérisé en ce que** le matériau plat est fabriqué de manière non-continue et le durcissement du noyau support (10) dans l'outil s'effectue sur une durée comprise entre 60 et 90 minutes, de préférence 75 minutes, à une température comprise entre 100 et 170°C, de préférence à 135°C.

13. Procédé selon la revendication 11, **caractérisé en ce que** le noyau support est fabriqué en continu sur une bande et le durcissement s'effectue sur la bande.

14. Procédé selon l'une quelconque des revendications 11 à 13, **caractérisé en ce que** l'assemblage du revêtement (52) avec le noyau support (10) s'effectue à l'aide d'une presse en le durcissant sur une durée comprise entre 60 et 90 minutes, de préférence 75 minutes, à une température comprise entre 100 et 170°C, de préférence à 135°C.

15. Procédé selon l'une quelconque des revendications 11 à 14, **caractérisé en ce que,** comme revêtement supplémentaire, un film (54) est assemblé avec le noyau support au moyen d'un non-tissé adhésif thermoplastique sur une durée comprise entre 5 et 15 minutes, de préférence sur une durée de 10 minutes, à une température comprise entre 100 et 150°C, de préférence à 125°C.
